## Europäisches Patentamt

## European Patent Office

## Office européen des brevets

(19)

(11) Veröffentlichungsnummer: **0 096 340**
**B1**

(12) # EUROPÄISCHE PATENTSCHRIFT

(45) Veröffentlichungstag der Patentschrift:
**20.05.87**

(51) Int. Cl.⁴: **B 01 D 13/00**

(21) Anmeldenummer: **83105380.6**

(22) Anmeldetag: **31.05.83**

(54) **Membranmodul und seine Verwendung zur Trennung von Flüssigkeiten nach dem Pervaporationsverfahren.**

(30) Priorität: **01.06.82 DE 3220613**

(43) Veröffentlichungstag der Anmeldung:
**21.12.83 Patentblatt 83/51**

(45) Bekanntmachung des Hinweises auf die Patenterteilung:
**20.05.87 Patentblatt 87/21**

(84) Benannte Vertragsstaaten:
**AT BE CH DE FR GB IT LI NL SE**

(56) Entgegenhaltungen:
**EP-A-0 040 411**
**DE-A-2 634 369**
**GB-A-1 096 680**
**GB-A-2 063 705**
**US-A-3 839 201**
**US-A-4 083 780**

(73) Patentinhaber: **GFT Ingenieurbüro für Industrieanlagenbau, Lieselottenstrasse 12, D-6650 Homburg / Saar (DE)**

(72) Erfinder: **Brüschke, Harmut, Dr., Kurpfalzstrasse 64, D-6907 Nussloch (DE)**

(74) Vertreter: **Dost, Wolfgang, Dr.rer.nat., Dipl.- Chem., Patent- und Rechtsanwälte Bardehle- Pagenberg- Dost- Altenburg & Partner Postfach 86 06 20, D-8000 München 86 (DE)**

EP 0 096 340 B1

## Beschreibung

Die Erfindung betrifft ein Membranmodul wie es im Oberbegriff des Anspruchs 1 näher gekennzeichnet ist.

Für die Trennung von Stoffgemischen mittels Membranen sind Vorrichtungen bekannt, die als Spiralwickelmodule bezeichnet werden. Für die jeweilige Trennaufgabe geeignete Membranen werden für die Herstellung dieser Module mit den inaktiven Flächen, d.h. die aktiven Trennflächen nach außen, aufeinandergelegt und an den Rändern verklebt. In die so gebildeten Taschen werden Vliese oder Tücher für die Drainage des Permeats eingelegt. Eine oder mehrere dieser Taschen werden an mit Bohrungen in der Mantelfläche versehenen Rohren befestigt dergestalt, daß die Drainage des Permeats durch die Bohrungen in das Innere des Rohres erfolgen kann, aber keine Fließmöglichkeit aus dem Rohrinnern auf die aktive Außenfläche (Trennschicht) der Membranen besteht. Anschließend werden die eine oder mehreren, mit ihrer Drainageableitung mit dem Rohrinnern in Verbindung stehenden Membrantaschen spiralförmig um dieses Rohr herumgewickelt, wobei Zwischenlagen aus Kunststoffnetz zwischen den aktiven Membranflächen einen Flüssigkeitskanal offenhalten, und verklebt. Die so erhaltenen Membranmodule weisen somit zwei durch die Membran getrennte Flüssigkeitskanäle auf:

a) Die in axialer Richtung zwischen den aktiven Membranflächen und durch Kunststoffnetz offengehaltenen Kanäle für den Zulauf, und

b) die spiralig um das Zentralrohr herumgeführten Permeatleitungen, die durch das Drainagevlies oder -tuch gebildet werden und das durch die Membran hindurchtretende Permeat in das Innere des Zentralrohrs abführen.

Diese bekannten Spiralwickelmodule werden besonders für die Abtrennung von Wasser aus Lösungen nach dem Prinzip der Umkehrosmose eingesetzt. Sie zeichnen sich durch eine hohe Packungsdichte (m² Membranfläche pro Modulvolumen) und gute Druckfestigkeit aus, weisen aber auch einen wesentlichen, für bestimmte Trennaufgaben entscheidenden Nachteil auf: das durch die Membran hindurchtretende Permeat kann nur durch das Drainagevlies über einen langen Weg in das zentrale Permeatsammelrohr abgeführt werden, wobei der zur Verfügung stehende Strömungsquerschnitt noch durch die auf die aktiven Membranflächen wirkende Druckbelastung verkleinert wird. Es treten ferner erhebliche Druckverluste zwischen dem Innern des Permeatsammelrohres und dem Ende des Drainagevlieses auf.

Auf verschiedene Weise ist versucht worden, diese für Spiralwickelmodule wesensbedingten Nachteile zu mildern, die Praxis hat jedoch gelehrt, daß beim Einsatz von Spiralwickelmodulen nur dann zufriedenstellende Ergebnisse erzielt werden können, wenn das Volumenverhältnis zwischen Zulauf und Permeat einen Wert von 10 nicht wesentlich unterschreitet. Während dies für Flüssig-Flüssigtrennungen bei denen beim Durchtritt durch die Membran keine merkliche Änderung des spezifischen Volumens auftritt, noch durchaus akzeptabel ist, kann eine Trennung nach dem Verfahren der Pervaporation mit den dem Stand der Technik entsprechenden Spiralwickelmodulen in wirtschaftlicher Weise nicht durchgeführt werden. Bei diesem Verfahren verdampft das Permeat beim Durchtritt durch den Membran und wird entweder durch Abpumpen oder durch einen Inertgasstrom abgeführt. Allein durch das Verdampfen entsteht eine so große spezifische Volumenzunahme, daß die dann auch noch unter vermindertem Druck stehenden Dampfvolumina durch ein Drainagevlies nicht mehr abgeführt werden können. Da beim Pervaporationsverfahren nur eine geringe transmembrane Druckdifferenz besteht, können Druckverluste im Permeatkanal nicht hingenommen werden. Diese Nachteile werden durch die vorliegende Erfindung vermieden.

Die DE-A- 2 634 369 beschreibt eine Stoffaustauscheinrichtung für künstliche Nieren. Diese Vorrichtung ist nicht für die Pervaporation vorgesehen. Das GB-A- 2 063 705 und das US-A- 4 083 780 beschreiben Umkehrosmose-Einrichtungen mit einseitiger Permeatabfuhr.

Die Erfindung besteht in einem Membranmodul, wie er in den Ansprüchen definiert ist.

Gemäß der Erfindung werden zwei flächige, für die Trennung mittels Pervaporation geeignete Membranen so aufeinandergelegt, daß die Trennschichten (aktive Schichten) der Membranen einander zugewandt sind. Für bestimmte Anwendungsfälle kann es von Vorteil sein, zwischen die Membranflächen ein Kunststoffnetz einzulegen, um eine höhere Turbulenz der durchströmenden Flüssigkeit zu erreichen. Vorzugsweise erfolgt die Ausbildung des taschenförmigen Membranelements so, daß an den Längsseiten zwischen die Membranen schmale Streifen eines Dichtungsmaterials, z.B. aus Silikonkautschuk oder einem anderen Polymeren eingelegt werden, das auch eine gewisse Klebekraft besitzen soll. Vorzugsweise werden dann die beiden Membranen in an sich bekannter Weise durch den eingelegten Dichtungsstreifen hindurch vernäht, wobei eine Naht oder mehrere parallele Nähte gelegt werden können. Hierdurch wird erreicht, daß die beim Betrieb des späteren Moduls auftretenden Kräfte nicht nur durch die Verklebung auf die aktiven Membranoberflächen (Trennschichten) übertragen werden, wo sie leicht eine Ablösung der Trennschichten von ihrer Unterlage zur Folge haben könnten, sondern daß sie durch die Nähte auf das die Membran tragende Tuch oder Vlies übertragen und besser verteilt werden, wodurch die Anordnung nicht nur mit höheren Druckdifferenzen betrieben werden kann, sondern auch die Gefahr des Ablösens der aktiven Trennschicht beseitigt wird.

Je nach dem verwendeten Nähmaterial kann es erforderlich sein, eine zusätzliche Abdichtung der durch das Nähenentstandenen Löcher vorzunehmen. Hierzu kann in an sich bekannter Weise auf der Vlies- oder Tuchseite der Membran auf die Nähte ein Dichtungsmaterial aufgetragen werden oder über die Ränder ein auch die Nähte auf der Vlies- oder Tuchseite abdeckendes Klebeband geklebt werden.

Auf diese Weise entsteht eine an den Längsseiten vernähte und abgedichtete Tasche aus zwei mit ihrer aktiven Trennschicht zugewandten Membranen, zwischen denen ein für Flüssigkeiten durchlässiger Kanal besteht. Die offenen Schmalseiten dieser Tasche werden nun in an sich bekannter Weise mit zwei Zu/Ableitungen, vorzugsweise Rohren verklebt, die vorzugsweise in ihrer Mantelfläche Bohrungen derart aufweisen, daß aus dem Innern der Rohre durch die Bohrungen nur eine Verbindung in das Innere der aus den Membranen gebildeten Tasche besteht. Je ein Ende der Rohre ist durch eine geeignete Vorrichtung flüssigkeits- und gasdicht verschlossen. Das zu trennende Gemisch wird nun durch ein Rohr zugeführt und tritt durch die Bohrung in der Mantelfläche in den aus den Membranen gebildeten Flüssigkeitskanal über. Es verläßt ihn durch die Bohrungen in der Mantelfläche des zweiten Rohres und wird durch das zweite Rohr aus der Vorrichtung abgeführt. Befindet sich die Vorrichtung in einem evakuierten Raum oder wird ein Inertgasstrom über die offene Vlies- oder Tuchseite geführt, so können leichter permeierende Komponenten durch die Membran hindurchtreten und an ihrer offenen Seite verdampfen. Dadurch verarmt das Gemisch in dem von den Membranen gebildeten Kanal an den leichter permeierenden Komponenten, bis die erwünschte Trennung und Aufkonzentrierung erreicht ist.

Zur besseren Handhabung und zur Erzielung einer höheren Packungsdichte wird die aus den beiden Rohren und den dazwischen befindlichen Membranen bestehende Anordnung spiralig aufgewickelt, entweder nur um eines der beiden Rohre oder zu gleichen oder unterschiedlichen Teilen gleichsinnig oder gegensinnig um beide Rohre. Ein dabei mit aufgewickeltes grobmaschiges Kunststoffnetz sorgt dafür, daß die Vlies- oder Tuchseite der Membran während des Betriebes auf Abstand und damit der Permeatkanal offengehalten wird.

Durch eine äußere Umhüllung wird die spiralig aufgewickelte Vorrichtung zusammen- und in Form gehalten. Mehrere dieser Vorrichtungen können gemeinsam in einem geeigneten Gehäuse untergebracht werden, das evakuiert oder von einem Inertgasstrom durchflossen wird. Die Vorrichtungen werden dabei so geschaltet, daß das zu trennende Gemisch sie entweder parallel oder nacheinander durchströmt; eine optimale Anordnung kann vom Fachmann aus den Leistungsdaten der eingesetzten Membranen für das jeweilige Trennproblem berechnet werden.

Das erfindungsgemäße Membranmodul mit offenen Permeatkanälen ist nicht nur für eine Gemischtrennung mittels Pervaporation geeignet, sondern bei Verwendung entsprechender Membranen auch zur vorteilhaften Trennung von Gasgemischen.

Im folgenden wird die Erfindung anhand der Zeichnungen erläutert. Es zeigen:

Fig.1 in schematischer Darstellung eine Ansicht eines erfindungsgemäßen Membranmoduls,

Fig.2 eine Draufsicht auf ein teilweise geschnittenes Membranelement,

Fig.3 einen Schnitt durch Fig.2, senkrecht zur Linie I, I′, und

Fig.4 eine Querschnittsansicht eines spiralförmig aufgewickelten Membranmoduls der Erfindung.

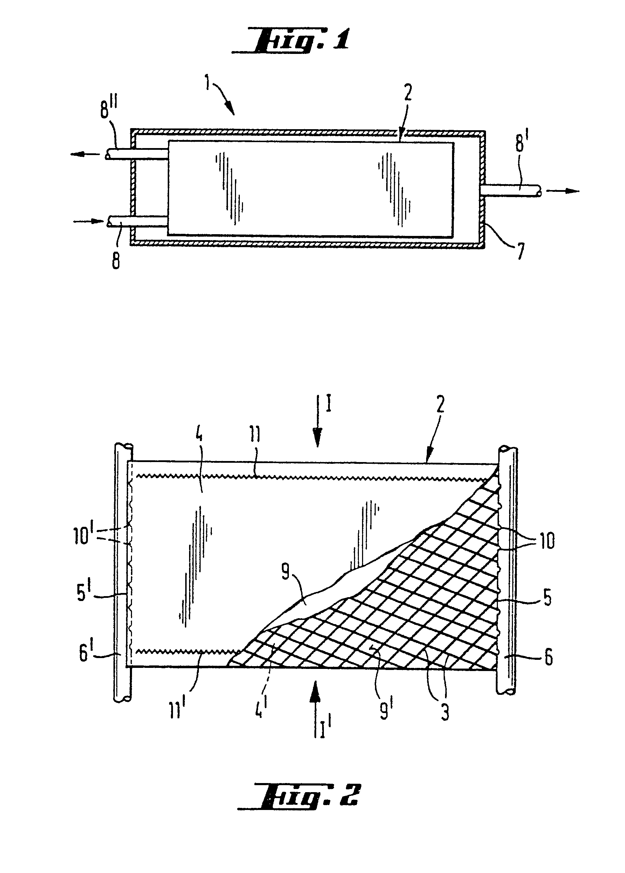

In Fig.1 besteht das Membranmodul 1 aus einem Membranelement 2 in einem Gehäuse 7 mit Zu- und Ableitungen 8, 8′, 8″.

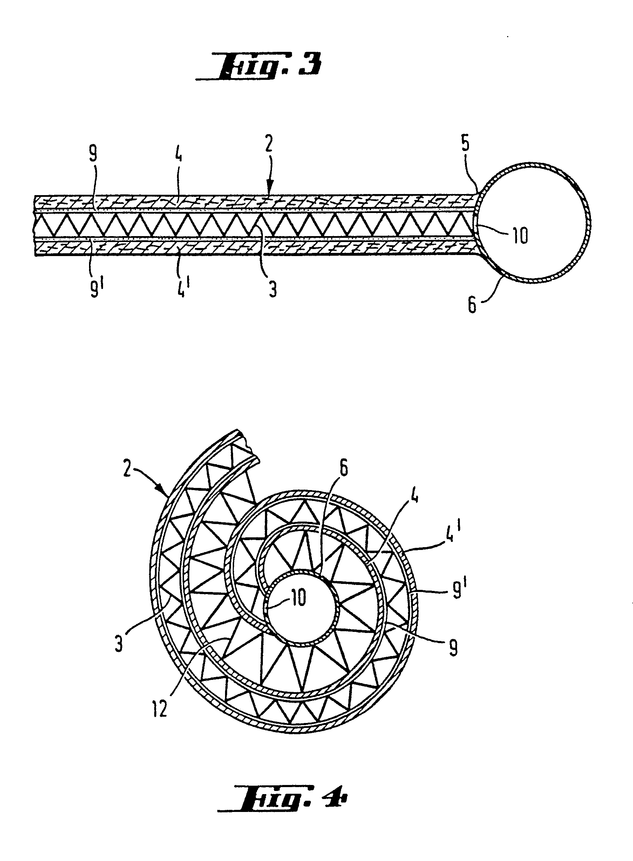

Fig.2 zeigt das Membranelement 2 mit zwei Membranen, 4, 4′ und dazwischenliegendem Kunststoffnetz 3. Hierbel sind Trennschichten 9, 9′ (siehe Fig.3) einander zugewandt, d.h. die Trennschichten liegen nach innen. Die beiden Membranen 4, 4′ sind an den Längsseiten miteinander verklebt und zusätzlich durch Nähte 11, 11′ verstärkt. An den Schmalseiten 5, 5′ ist das aus den Membranen 4, 4′ gebildete taschenförmige Gebilde mit Bohrungen 10, 10′ aufweisenden Rohren 6, 6′ so verklebt, daß die Rohre 6, 6′ mit dem Tascheninnern in Verbindung stehen. Der Zulauf tritt über eines der beiden Rohre 6, 6′ ein und über das andere in aufkonzentrierter Form wieder aus, während das Permeat durch die Membranen hindurchtritt und aus dem Gehäuse 7 (Fig.1) entfernt wird.

Fig.4 zeigt im Querschnitt ein spiralförmig aufgewickeltes Membranelement 2, wobei ein Abstandshalter 12 für den erforderlichen Abstand zwischen den Membranwicklungen sorgt.

**Patentansprüche**

1. Membranmodul zur Trennung von Stoffgemischen, mit einem taschenförmigen Membranelement, das aus zwei gegenüberliegenden,Trennschichten enthaltenden Membranen besteht, wobei die Membranen auf Abstand gehalten werden, gegebenenfalls mittels einer Einlage, und wobei sich an einem Ende eine mit dem Tascheninneren in Verbindung stehende Zu/Ableitung befindet und wobei sich das Membranelement in einem Gehäuse mit Zu- und Ableitungen befindet, dadurch gekennzeichnet, daß die Trennschichten (9, 9′) der Membranen (4, 4′) für die Trennung mittels Pervaporation geeignet und einander zugewandt sind und das Membranelement (2) auch an dem anderen Ende (5') eine mit dem Tascheninneren in Verbindung stehende Zu/Ableitung (6') aufweist.

2. Membranmodul nach Anspruch 1, dadurch gekennzeichnet, daß das taschenförmige Membranelement (2) zur besseren Verteilung der mechanischen Belastungen an den Verschlußkanten Verstärkungsnähte (11, 11') aufweist.

3. Membranmodul nach Anspruch 1 oder 2, dadurch gekennzeichnet, daß das Membranelement (2) um eine oder beide Zu/Ableitungen (6, 6'), ganz oder teilweise zusammen mit einem Abstandhalter (12) spiralförmig aufgewickelt ist.

4. Membranmodul nach einem der Ansprüche 1 bis 3, dadurch gekennzeichnet, daß das Gehäuse (7) als evakuierbares Gehäuse ausgebildet ist.

5. Membranmodul nach einem der Ansprüche 1 bis 4, dadurch gekennzeichnet, daß zwei oder mehr Membranelemente (2) in einem Gehäuse (7) angeordnet sind.

6. Membranmodul nach einem der Ansprüche 1 bis 5, dadurch gekennzeichnet, daß die Zu/Ableitungen des Membranelemente (2) als mit Bohrungen (10, 10') versehene Rohre (6, 6') ausgebildet sind.

7. Membranmodul nach einem der vorhergehenden Ansprüche, dadurch gekennzeichnet, daß die zwei Membranen an ihren Schmalseiten mit jeweils einem Rohr (6 bzw. 6'), welches Bohrungen (10 bzw. 10') aufweist, so verklebt sind, daß die Rohre mit den Inneren des taschenförmigen Membranelements in Verbindung stehen.

8. Verwendung des Membranmoduls nach einem der Ansprüche 1 bis 7 zur Trennung von Flüssigkeiten nach dem Pervaporationsverfahren.

## Claims

1. A membrane module for the separation of material mixtures having a pocket-shaped membrane element consisting of two oppositely arranged membranes containing separating layers, said membranes being kept apart, possibly by means of an insert, wherein a supply/discharge conduit in communication with the interior of the pocket is provided at one end and wherein the membrane element is provided in a housing having supply and discharge conduits, characterized in that the separating layers (9, 9') of membranes (4, 4') are appropriate for the separation by means of pervaporation and are facing one another, and the membrane element (2) also at the other end (5') comprises a supply/discharge conduit (6') in communication with the interior of the pocket.

2. A membrane module according to claim 1, characterized in that the pocket-shaped membrane element (2), for the better distribution of the mechanical load, comprises reinforcing seams (11, 11') provided on the sealing edges.

3. A membrane module according to claim 1 or 2, characterized in that said membrane element (2) is helically wound around one or both supply/discharge conduits (6, 6') in whole or part together with a spacer element (12).

4. A membrane module according to one of claims 1 to 3, characterized in that the housing (7) is formed as an evacuable housing.

5. A membrane module according to one of claims 1 to 4, characterized in that two or more membrane elements (2) are located in a housing (7).

6. A membrane module according to one of claims 1 to 5, characterized in that the supply/discharge conduits of said membrane element (2) are formed as tubes (6, 6') provided with bores (10, 10').

7. A membrane module according to one of the preceding claims, characterized in that the two membranes are glued at their narrow sides with a tube (6 resp. 6'), respectively, comprising bores (10 resp. 10'), such that the tubes are in communication with the interior of the pocketshaped membrane element.

8. Use of said membrane module according to one of claims 1 to 7 for the separation of liquids according to the pervaporation process.

## Revendications

1. Module de membrane destiné à la séparation de mélanges de matières, comportant un élément de membrane en forme de poche, lequel élément est constitué par deux membranes contenant des couches de séparation, opposées entre elles, les membranes étant maintenues à une certaine distance entre elles, le cas échéant au moyen d'une pièce intermédiaire, une conduite d'amenée/évacuation sur une extrémité se trouvant en communication avec l'intérieur de la poche et l'élément de membrane étant situé dans un logement avec les conduites d'amenée et d'évacuation, caractérisé en ce que, les couches de séparation (9, 9') des membranes (4, 4') conviennent à la séparation par pervaporation et sont dirigées l'une vers l'autre et en ce que, l'élément de membrane (2) présente également sur l'autre extrémité (5') une conduite d'amenée/évacuation (6') en communication avec l'intérieur de la poche.

2. Module de membrane selon la revendication 1, caractérisé en ce que l'élément de membrane en forme de poche (2) présente des cordons de renforcement (11, 11,) sur les bords de fermeture en vue d'une meilleure répartition des efforts mécaniques.

3. Module de membrane selon la revendication 1 ou 2, caractérisé en ce que l'élément de membrane (2) est enroulé en forme de spirale sur une ou sur les deux conduites d'amenée/évacuation (6, 6') entièrement ou partiellement, conjointement avec un écarteur (12).

4. Module de membrane selon l'une des revendications 1 à 3, caractérisé en ce que le logement (7) est conçu sous forme d'un logement dans lequel le vide peut être fait.

5. Module de membrane selon l'une des revendications 1 à 4, caractérisé en ce que deux éléments de membrane (2) ou plus sont disposés dans un logement (7).

6. Module de membrane selon l'une des revendications 1 à 5, caractérisé en ce que les conduites d'amenée/évacuation de l'élément de membrane (2) sont conçues sous forme de tubes (6, 6') munis d'alésages (10, 10').

7. Module de membrane selon l'une quelconque des revendications précédentes, caractérisé en ce que les deux membranes, munies respectivement d'un tube (6 ou 6') sur leurs côtés étroits, lequel comporte des alésages (10 ou 10'), sont collées de telle manière que les tubes sont en communication avec les parties intérieures de l'élément de membrane en forme de poche.

8. Utilisation du module de membrane, selon l'une des revendications 1 à 7 pour la séparation de liquides selon le procédé de pervaporation.

# Fig. 1

# Fig. 2

## Fig. 3

## Fig. 4